# FASCICULE DE BREVET EUROPEEN

(11) **EP 1 347 207 B1**
(45) Date de publication et mention de la délivrance du brevet: **15.06.2005**
(21) Numéro de dépôt: 03290684.4
(22) Date de dépôt: 18.03.2003
(51) Int. Cl.: F16H 25/22

(54) **Dispositif d'actionnement de vis à rouleaux satellites**
Linearantrieb mit Gewinderollen
Actuator with planetary threaded rollers

(30) Priorité: 20.03.2002 FR 0203489
(43) Date de publication de la demande: 24.09.2003
(73) Titulaire: TRANSROL, 73000 Chambéry (FR)
(72) Inventeur: Benoit, Laurent Pierre Noel, 73230 Saint Alban-Leysse (FR)
(74) Mandataire: Casalonga, Axel

(56) Documents cités:
- DE-A- 1 931 861
- DE-U- 8 702 656
- PATENT ABSTRACTS OF JAPAN vol. 008, no. 276 (M-346), 18 décembre 1984 (1984-12-18) & JP 59 147151 A (TSUBAKIMOTO SEIKOU:KK), 23 août 1984 (1984-08-23)

## Description

La présente invention concerne le domaine des dispositifs d'actionnement dans lesquels la transmission de mouvement entre deux parties longitudinales concentriques, tournant l'une par rapport à l'autre, est obtenue par l'intermédiaire de rouleaux longitudinaux et propose des perfectionnements à de tels dispositifs.

Un dispositif d'actionement selon le préambule de la revendication 1 est connu par DE-U-8 702 656.

Le dispositif d'actionnement selon l'invention comprend les caractéristiques de la revendication 1.

Selon l'invention, le dispositif peut avantageusement comprendre des moyens de guidage longitudinal reliant ledit support et ledit fourreau.

Selon l'invention, le dispositif comprend de préférence des bagues d'extrémité placées de part et d'autre desdits rouleaux et présentant des trous longitudinaux dans lesquels sont respectivement engagées des extrémités de ces rouleaux.

Selon l'invention, ladite tige d'entraînement comprend de préférence deux parties annulaires à dents d'engrenage entre lesquelles s'étend, au moins en partie, son filetage précité.

Selon l'invention, le dispositif peut avantageusement comprendre une bague de glissement portée par ledit fourreau et placée autour de la partie de ladite tige d'entraînement située entre sa partie avant et sa partie arrière précitées.

Selon l'invention, ledit fourreau comprend de préférence une tige longitudinale de guidage engagée dans un alésage de guidage de ladite tige d'entraînement.

Selon l'invention, ladite tige d'entraînement est de préférence montée dans ledit support par l'intermédiaire d'un palier à roulement formant butée axiale.

Selon l'invention, ledit moyen d'entraînement comprend de préférence un moteur dont le carter porte ledit arbre moteur et est fixé audit support.

Selon une variante de l'invention, l'arbre moteur dudit moyen d'entraînement et ladite tige d'entraînement sont alignés et présentent entre eux des moyens d'accouplement en rotation.

Selon une autre variante de l'invention, l'arbre moteur dudit moyen d'entraînement et ladite tige d'entraînement sont alignés et sont formés d'une pièce pour constituer un arbre d'entraînement.

Selon l'invention, ledit arbre d'entraînement est de préférence monté tournant dans ledit support par l'intermédiaire d'un palier à roulement formant butée axiale et, à l'opposé de sa partie filetée précitée, dans un carter du moyen d'entraînement fixé audit support par l'intermédiaire d'un palier à roulement.

Selon une variante préférée l'invention, ladite tige d'entraînement est monobloc.

Selon une autre variante l'invention, ladite tige d'entraînement comprend une partie principale longitudinale sur laquelle sont rapportés un manchon présentant son filetage précité et/ou au moins une bague présentant sa partie annulaire précitée à dents d'engrenage.

Selon l'invention, le filetage précité et les dents d'engrenage précitées de ladite tige d'entraînement présentent de préférence le même diamètre extérieur.

Selon l'invention, ladite tige d'entraînement peut présenter une gorge ménagée entre son filetage précité et sa partie annulaire à dents d'engrenage.

Selon l'invention, les dents d'engrenage desdits rouleaux peuvent être réalisées dans leur partie filetée précitée.

Selon l'invention, le dispositif comprend de préférence des moyens formant butées coopérant avec lesdites bagues d'extrémité et placées de part et d'autre de l'empilage longitudinal constitué par ces bagues d'extrémité et les rouleaux.

La présente invention sera mieux comprise à l'étude de dispositifs d'actionnement ou actionneurs décrits à titre d'exemples non limitatifs et illustrés par le dessin sur lequel :
- la figure 1 représente une coupe longitudinale d'un premier actionneur selon l'invention ;
- la figure 2 représente une coupe longitudinale d'une partie agrandie de l'actionneur de la figure 1 ;
- la figure 3 représente une coupe transversale de l'actionneur de la figure 1 ;
- la figure 4 représente une vue en bout, par l'arrière, de l'actionneur de la figure 1 ;
- la figure 5 représente une coupe longitudinale d'un second actionneur selon l'invention ;
- la figure 6 représente une coupe longitudinale d'un troisième actionneur selon l'invention ;
- la figure 7 représente une coupe longitudinale d'un quatrième actionneur selon l'invention ;
- la figure 8 représente une coupe longitudinale d'un cinquième actionneur selon l'invention.

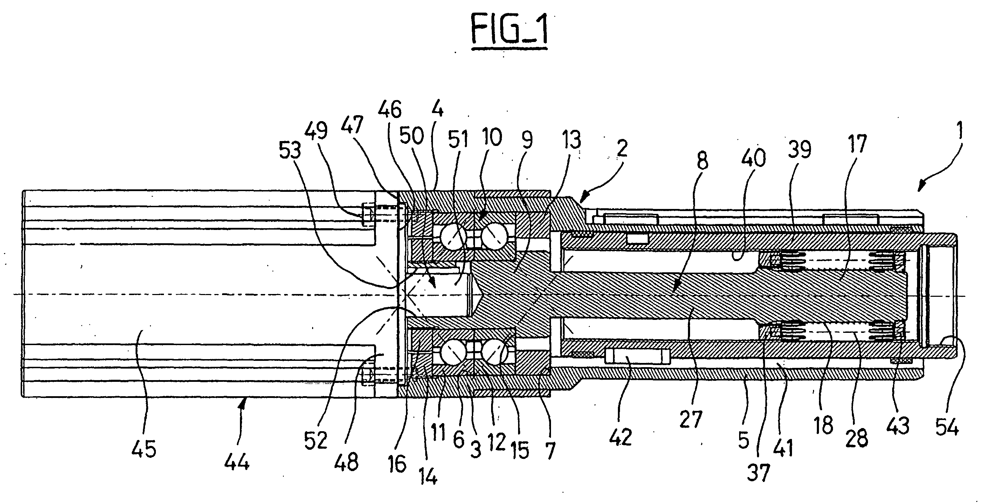

En se reportant aux figures 1 à 4, on peut voir qu'on a représenté un actionneur 1 qui comprend un support tubulaire 2 qui comprend un corps longitudinal 3 dont l'enveloppe 4 est sensiblement de section carrée et une partie cylindrique longitudinale 5 qui prolonge vers l'avant le corps 3.

Le corps 3 présente un alésage longitudinal 6 qui se termine du côté de la partie cylindrique 5 par un épaulement annulaire 7.

L'actionneur 1 comprend une tige longitudinale d'entrainement 8 qui s'étend axialement dans le support 2 et dont la partie d'extrémité arrière 9 est portée par le corps 3 du support 2 par l'intermédiaire d'un palier à enroulement 10 formant butées axiales dans les deux sens.

Dans l'exemple représenté, ce palier à roulement 10 comprend deux roulements à billes accolés 11 et 12 dont les bagues extérieures sont prises entre d'une part l'épaulement 7 du corps 3 par l'intermédiaire d'une bague 13 et d'autre part par une bague 14 vissée dans un filetage arrière de l'alésage 6 et dont les bagues intérieures sont prises entre d'une part un épaulement avant 15 de la partie d'extrémité arrière 9 de la tige 8 et d'autre part une bague 16 vissée sur une partie arrière filetée de la partie d'extrémité arrière 9 de la tige 8.

La partie d'extrémité avant 17, située à distance de sa partie d'extrémité arrière 9, présente une partie extérieure filetée 18 et, de part et d'autre de ce filetage 18, des parties à dents d'engrenage droites 19 et 20 séparées du filetage 18 par des gorges annulaires 21 et 22, le filetage 18 et les parties dentées 19 et 20 présentant dans l'exemple le même diamètre extérieur.

La partie d'extrémité avant 17 présente en outre, en avant de sa partie dentée 20, une partie cylindrique terminale 23 dans laquelle est ménagée une gorge annulaire 23 et, en arrière de la partie dentée 19, une partie cylindrique 25 dans laquelle est ménagée une gorge annulaire 26.

Entre sa partie d'extrémité arrière 9 et sa partie d'extrémité avant 17, la tige longitudinale 8 présente une partie cylindrique intermédiaire 27 de diamètre réduit par rapport au diamètre extérieur de sa partie d'extrémité avant 17.

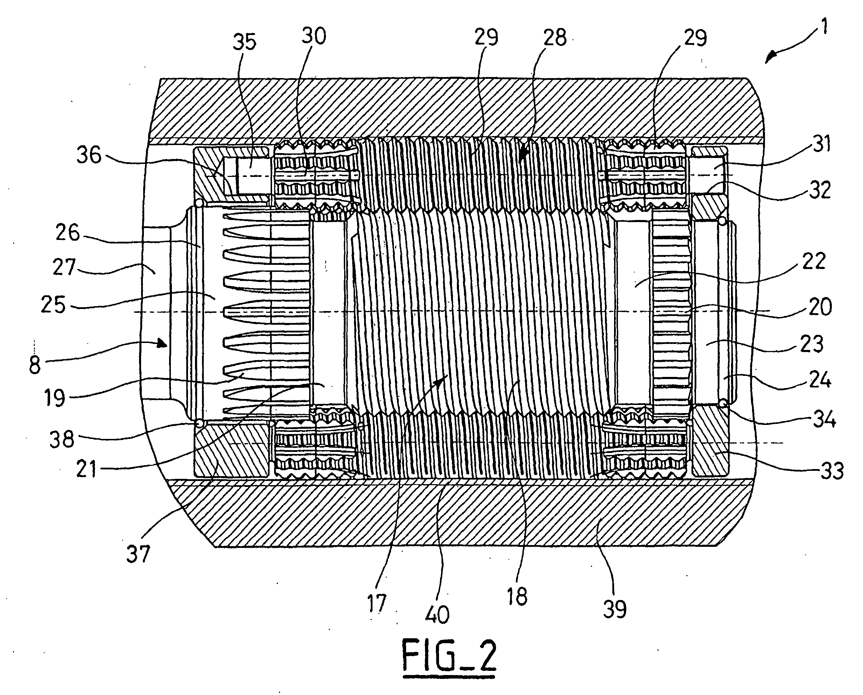

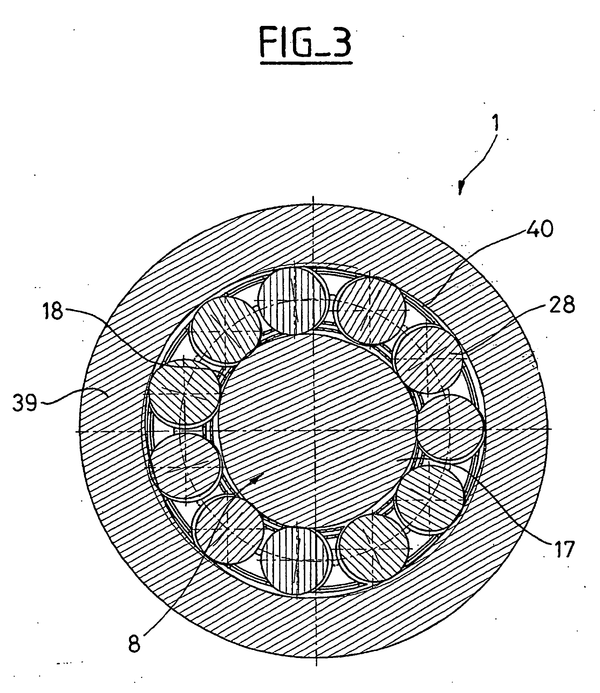

Comme on le voit plus précisément sur les figures 2 et 3, l'actionneur 1 présente en outre une série de rouleaux longitudinaux 28 qui sont répartis autour de la partie d'extrémité avant 17 de la tige longitudinale 8 et qui présentent, sur leur longueur un filetage 29. Les filetages des rouleaux 28 sont en prise avec le filetage 18 de la tige longitudinale 8. Les rouleaux présentent, dans leurs parties d'extrémité, d'une part une partie à dents d'engrenage droites 29 en prise avec les dents d'engrenage 20 et d'autre part une partie à dents d'engrenage droites 30 en prise avec les dents d'engrenage 19.

Les rouleaux longitudinaux 19 présentent des parties terminales avant 31 cylindriques, de diamètres déduits, qui sont engagées respectivement dans des trous 32 ménagés dans une bague avant 33 montée autour de la partie cylindrique terminale 23 de la tige 8, cette bague étant maintenue par un jonc annulaire 34 installé dans la gorge 24 de cette partie terminale 23.

Les rouleaux longitudinaux 28 présentent en outre des parties terminales arrières 35 cylindriques, de diamètres réduits, qui sont engagées dans des trous 36 ménagés dans une bague arrière 27 montée autour de la partie cylindrique 25, cette bague 37 étant maintenue par un jonc annulaire 38 installé dans la gorge 26 de cette partie cylindrique 25.

Le filetage 18 de la partie d'extrémité avant 17 de la tige longitudinale 8 et les filetages des rouleaux 28 présentent des angles d'hélice identiques de telle sorte que, lorsque l'ensemble constitué par les rouleaux longitudinaux 28 et les bagues de maintien 33 et 37 tournent autour de la tige 9, les rouleaux tournent par rapport à la tige 8 sans se déplacer longitudinalement.

L'actionneur 1 comprend en outre un fourreau longitudinal cylindrique 39 qui est installé autour et à distance de la partie d'extrémité avant 17 de la tige longitudinale 8 et de la partie intermédiaire 27 et engagé à l'intérieur de la partie cylindrique 5 du support 2. Le fourreau longitudinal 39 présente un filetage intérieur 40 qui est en prise avec les filetages 29 des rouleaux longitudinaux 28 et dont l'angle d'hélice est différent de l'angle d'hélice de ces filetages 29.

Dans l'exemple représenté, la partie cylindrique 5 du support 2 présente une rainure inférieure longitudinale de guidage 41 et le fourreau 39 porte extérieurement une clavette 42 engagée dans cette rainure 41.

Ainsi, lorsque la tige longitudinale 8 est entraînée en rotation par rapport au support 2, son mouvement de rotation est transformé en un mouvement de translation longitudinale du fourreau 39 par l'intermédiaire des rouleaux 28 qui tournent sur eux même et roulent par rapport à la tige 8 et par rapport au fourreau 39.

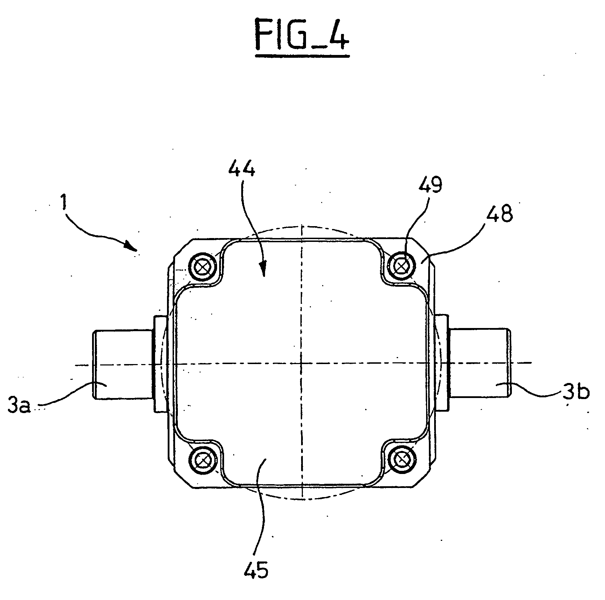

Comme on le voit plus précisément sur les figures 1 et 4, pour entraîner en rotation la tige longitudinale 8, l'actionneur 1 comprend en outre un moteur électrique arrière 44 qui présente un carter longitudinal 45 qui présente une face avant 46 accouplée à une face arrière 47 du corps 3 du support 2. Le carter 45 présente quatre oreilles avant 48 traversées par des vis longitudinales de fixation vissées dans les coins du corps 3 du support 2.

Le moteur électrique 44 présente un arbre moteur 50 dont la partie d'extrémité avant 51 est engagée dans un alésage longitudinal 52 ménagé par l'arrière dans la partie d'extrémité arrière 9 de la tige longitudinale 8, une clavette 53 reliant en rotation l'arbre moteur 50 et la tige longitudinale 8.

D'une manière générale, l'actionneur 1 qui vient d'être décrit peut être installé entre deux organes non représentés, à déplacer longitudinalement l'un par rapport à l'autre, le corps 3 du support 2 étant fixé à l'un des organes par exemple par l'intermmédiaire de deux pivots opposés 3a et 3b et l'extrémité avant du fourreau 39 étant reliée à l'autre, le fourreau 39 présentant à cet effet une partie filetée 54 de diamètre accru ménagée dans sa partie intérieure avant

Dans une variante d'exécution, dans la mesure où les organes à déplacer ci-dessus sont liés en rotation l'un par rapport à l'autre, la liaison en rotation et le guidage longitudinal entre le support 2 et le fourreau 39, obtenus par la rainure 41 et la clavette 42, pourraient être supprimés.

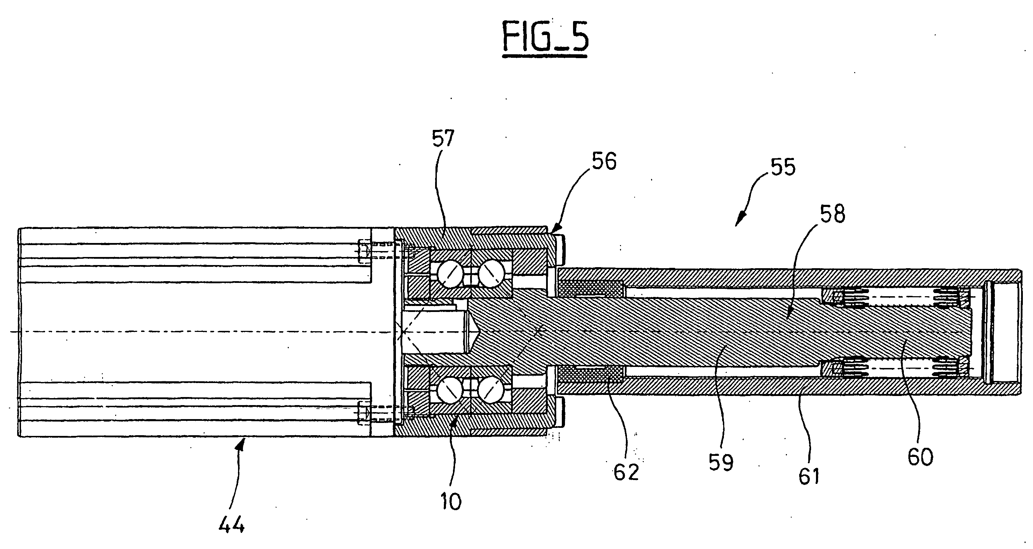

En se reportant à la figure 5, on peut voir qu'on a représenté un actionneur 55 qui se différencie de l'actionneur 1 décrit en référence aux figures 1 à 4 essentiellement par les points suivants.

Son support 56 présente uniquement un corps 57 correspondant au corps 3 du support 2, la partie cylindrique avant 5 de ce dernier étant supprimée.

Sa tige longitudinale d'entraînement 58 présente une partie intermédiaire cylindrique 59 dont le diamètre est plus grand que le diamètre extérieur de sa partie d'extrémité avant 60.

Son fourreau longitudinal 61 est cylindrique et porte dans un alésage arrière non fileté une bague intermédiaire 62 de glissement qui entoure et prend appui sur la partie intermédiaire cylindrique 59.

Dans cet exemple, le fourreau 61 n'est pas immobilisé en rotation par rapport au support 56, cette immobilisation pouvant être assurée par les organes à déplacer auxquels ils sont reliés comme on l'a mentionné plus haut.

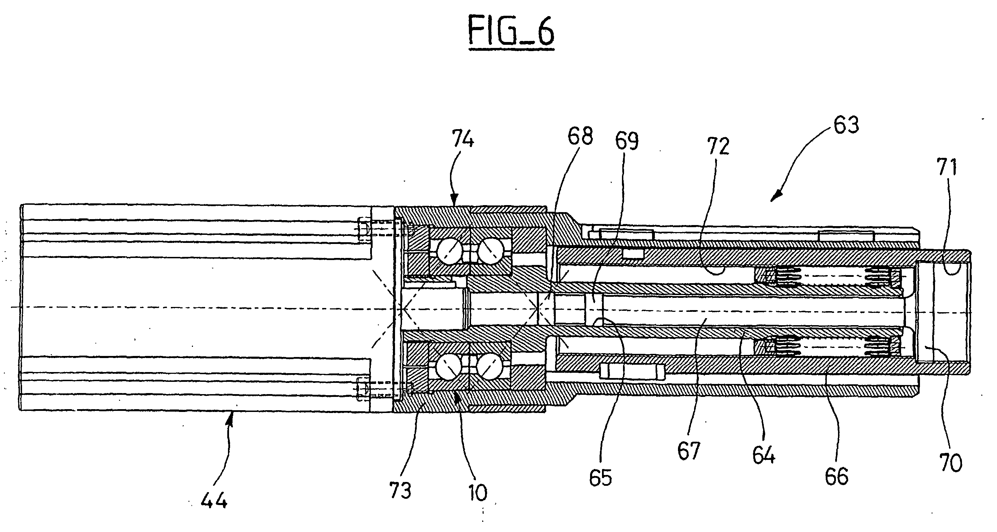

En se reportant à la figure 6, on voit qu'on a représenté un actionneur 63 qui se différencie de l'actionneur 1 décrit en référence aux figures 1 à 4 par les points suivants.

Sa tige longitudinale d'entraînement 64 présente un alésage cylindrique 65 dans lequel est engagée par l'avant une tige longitudinale de guidage 67 qui présente sur sa partie arrière des parties annulaires 68 et 69 en saillie en contact avec l'alésage 65. Cette tige de guidage 67 présente une partie avant 70 de diamètre accru qui est disposée en avant de l'extrémité avant de la tige d'entraînement 64 et qui par exemple est vissée dans un alésage avant filetée 71 du fourreau longitudinal 66, ce filetage présentant un diamètre accru plus grand que le filetage intérieur 72 de ce fourreau correspondant au filetage 40.

La tige de guidage 67 contribue au guidage longitudinal du fourreau 66 lorsque ce dernier s'éloigne du corps 73 de son support 74.

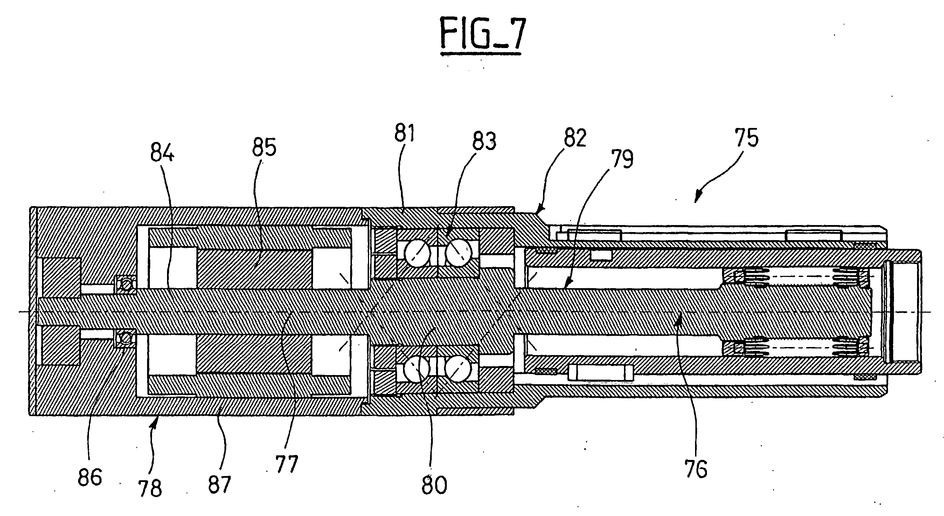

En se reportant à la figure 7, on peut voir qu'on a représenté un actionneur 75 qui se différencie de l'actionneur 1 décrit en référence aux figures 1 à 4 essentiellement par le fait que sa tige d'entraînement 76 et l'arbre moteur 77 de son moteur électrique 78 sont d'une seule pièce qui constitue un arbre d'entraînement 79.

Cet arbre d'entraînement 79 comprend une partie médiane 80 qui est portée par le corps 81 de son support 82 par l'intermédiaire d'un palier à roulement 83 qui correspond au palier à roulement 10.

L'arbre d'entraînement 79 présente une tige longitudinale arrière cylindrique 84 qui est de diamètre réduit par rapport à celui de sa partie médiane 80 et qui porte le bobinage du rotor 85 du moteur 78, un palier à roulement 86 étant interposé entre la partie d'extrémité arrière de la tige cylindrique 84 et la partie arrière du carter 87 du moteur 78.

D'un point de vue pratique et pour les éléments constructifs qui suivent, on pourra installer l'arbre d'entraînement 79 au travers du support 82 par l'intermédiaire du palier à roulement 23, effectuer le montage du rotor 85 sur la tige arrière 84 de l'arbre d'entraînement 79, extérieurement au support 82, mettre en place le palier à roulement 86 et le carter 87 puis fixer ce dernier au corps 81 du support 82.

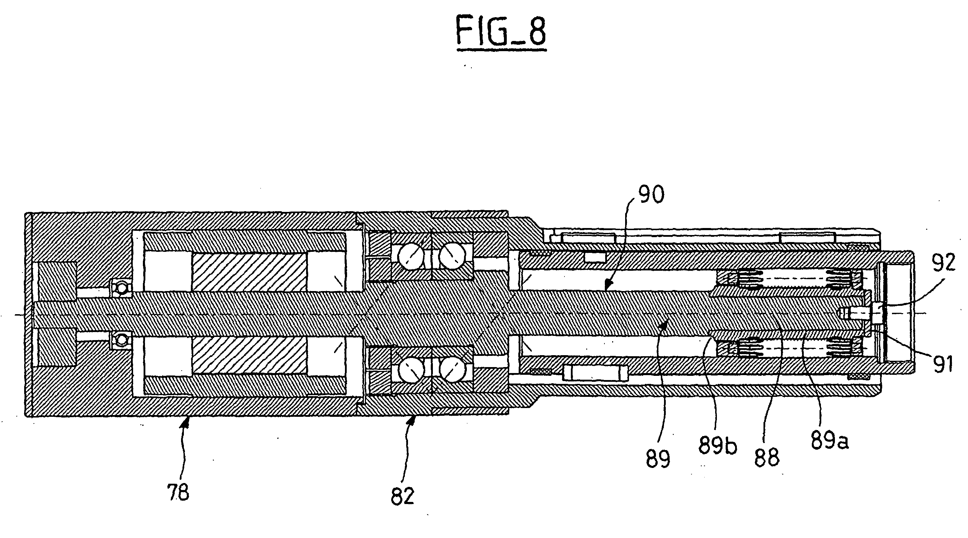

En se reportant à la figure 8, on peut voir qu'on a représenté un actionneur 87 qui se différencie de celui représenté sur la figure 7 et décrit ci-dessus essentiellement par le fait que la partie d'extrémité avant 88 de sa tige avant d'entraînement 89 de son arbre d'entraînement 90 présente un manchon cylindrique rapporté 91 à la périphérie de laquelle sont ménagés le filetage 18, les dentures d'engrenage 19 et 20, les gorges 21 et 22, les parties cylindriques 23 et 25 et les gorges 24 et 25 de la partie d'extrémité avant 17 de la tige d'entraînement 8 de l'exemple décrit en référence aux figures 1 à 3, ce manchon rapporté 91 étant par exemple monté autour d'une partie 89a de diamètre réduit de la partie d'extrémité de la tige 89 et fixé longitudinalement entre un épaulement 89b de cette tige 89 et une rondelle frontale 91 maintenue par une vis 92 vissée axialement dans l'extrémité de la tige 89. Le manchon rapporté 91 pourrait être fritté ou soudé sur la tige 89.

La présente invention ne se limite pas aux exemples ci-dessus décrits. Bien des variantes de réalisation sont possibles sans sortir du cadre défini par les revendications annexées.

## Revendications

1. Dispositif d'actionnement comprenant :
un support (2) ;
une tige d'entraînement longitudinale (8) dont une partie d'extrémité arrière (9) est montée tournante dans ledit support et dont une partie d'extrémité avant (17) présente un filetage extérieur (18) et, sur au moins une partie annulaire, des dents d'engrenage (19) ;
un fourreau longitudinal (39) placé autour et coaxialement à ladite tige d'entraînement et présentant un filetage intérieur ;
une série de rouleaux (28) placés longitudinalement entre ladite tige d'entraînement et ledit fourreau et présentant un filetage extérieur en prise avec d'une part le filetage de ladite tige d'entraînement et d'autre part le filetage dudit fourreau et des dents d'engrenage (30) en prise avec les dents d'engrenage de ladite tige d'entraînement,
et un moyen d'entraînement en rotation (44) de ladite tige d'entraînement (8), porté par ledit support (2) et dont l'arbre moteur (50) est couplé à l'extrémité arrière de cette tige d'entraînement (8), **caractérisé en ce que** l'angle d'hélice du filetage précité desdits rouleaux est égal à l'angle d'hélice du filetage de ladite tige d'entraînement et est différent de l'angle d'hélice du filetage précité dudit fourreau.

2. Dispositif selon la revendication 1, **caractérisé par le fait qu'**il comprend des moyens de guidage longitudinal (41, 42) reliant ledit support (3) et ledit fourreau (39).

3. Dispositif selon l'une des revendications 1 et 2, **caractérisé par le fait qu'**il comprend des bagues d'extrémité (33, 37) placées de part et d'autre desdits rouleaux et présentant des trous longitudinaux dans lesquels sont respectivement engagées des extrémités de ces rouleaux.

4. Dispositif selon l'une quelconque des revendications précédentes, **caractérisé par le fait que** ladite tige d'entraînement (8) comprend deux parties annulaires à dents d'engrenage (19, 20) entre lesquelles s'étend, au moins en partie, son filetage précité.

5. Dispositif selon l'une quelconque des revendications précédentes, **caractérisé par le fait qu'**il comprend une bague de glissement (62) portée par ledit fourreau et placée autour de la partie de ladite tige d'entraînement située entre sa partie avant et sa partie arrière précitées.

6. Dispositif selon l'une quelconque des revendications précédentes, **caractérisé par le fait que** ledit fourreau comprend une tige longitudinale de guidage (67) engagée dans un alésage de guidage (65) de ladite tige d'entraînement (64).

7. Dispositif selon l'une quelconque des revendications précédentes, **caractérisé par le fait que** ladite tige d'entraînement (8) est montée dans ledit support par l'intermédiaire d'un palier à roulement (10) formant butée axiale.

8. Dispositif selon l'une quelconque des revendications précédentes, **caractérisé par le fait que** ledit moyen d'entraînement comprend un moteur (44) dont le carter (45) porte ledit arbre moteur (51) et est fixé audit support (2).

9. Dispositif selon l'une quelconque des revendications précédentes, **caractérisé par le fait que** l'arbre moteur (50) dudit moyen d'entraînement et ladite tige d'entraînement (8) sont alignés et présentent entre eux des moyens d'accouplement en rotation (53).

10. Dispositif selon l'une quelconque des revendications 1 à 8, **caractérisé par le fait que** l'arbre moteur (77) dudit moyen d'entraînement et ladite tige d'entraînement (76) sont alignés et sont formés d'une pièce pour constituer un arbre d'entraînement (79).

11. Dispositif selon la revendication 10, **caractérisé par le fait que** ledit arbre d'entraînement (79) est monté tournant dans ledit support 82) par l'intermédiaire d'un palier à roulement (83) formant butée axiale et, à l'opposé de sa partie filetée précitée, dans un carter (87) du moyen d'entraînement fixé audit support , par l'intermédiaire d'un palier à roulement (86).

12. Dispositif selon l'une quelconque des revendications précédentes, **caractérisé par le fait que** ladite tige d'entraînement (8) est monobloc.

13. Dispositif selon l'une quelconque des revendications 1 à 11, **caractérisé par le fait que** ladite tige d'entraînement (89) comprend une partie principale longitudinale sur laquelle sont rapportés un manchon (91) présentant son filetage précité et/ou au moins une bague présentant sa partie annulaire précitée à dents d'engrenage.

14. Dispositif selon l'une quelconque des revendications précédentes, **caractérisé par le fait que** le filetage précité et les dents d'engrenage précitées de ladite tige d'entraînement (8) présentent le même diamètre extérieur.

15. Dispositif selon l'une quelconque des revendications précédentes, **caractérisé par le fait que** ladite tige d'entraînement (8) présente au moins une gorge (21) ménagée entre son filetage précité et sa partie annulaire à dents d'engrenage.

16. Dispositif selon l'une quelconque des revendications précédentes, **caractérisé par le fait que** les dents d'engrenage desdits rouleaux sont réalisées dans leur partie filetée précitée.

17. Dispositif selon l'une quelconque des revendications précédentes, **caractérisé par le fait qu'**il comprend des moyens (38) formant butées coopérant avec lesdites bagues d'extrémité et placées de part et d'autre de l'empilage longitudinal constitué par ces bagues d'extrémité et les rouleaux.

## Patentansprüche

1. Aktuatorvorrichtung, aufweisend:
eine Halterung (2);
einen Längsantriebsstab (8), von welchem ein hinterer Endbereich (9) drehbar in der Halterung angebracht ist und ein vorderer Endbereich (17) ein externes Gewinde (18) und mindestens teilweise auf einem ringförmigen Bereich Zahnradzähne (19) aufweist;
eine Längsummantelung (39), welche coaxial mit dem Antriebsstab um den selben angeordnet ist und ein internes Gewinde aufweist;
eine Reihe von Rollen (28), welche längs zwischen dem Antriebsstab und der Ummantelung angeordnet sind und welche ein externes Gewinde, welches einerseits mit dem Gewinde des Antriebsstabs und andererseits mit dem Gewinde der Ummantelung im Eingriff ist, und Zahnradzähne (30) aufweisen, welche mit den Zahnradzähnen des Antriebsstabs im Eingriff sind; und
eine Rotationsantriebseinrichtung (44) des Antriebsstabs (8), welche von der Halterung (2) gehalten ist und deren Motorwelle (50) mit dem hinteren Ende des Antriebsstabs (8) gekoppelt ist; **dadurch gekennzeichnet, daß**
der Steigungswinkel des genannten Gewindes der Rollen gleich dem Steigungswinkel des Antriebsstabs ist und sich von dem Steigungs des genannten Gewindes der Ummantelung unterscheidet.

2. Vorrichtung nach Anspruch 1, **dadurch gekennzeichnet, daß** sie eine Längsführungseinrichtung (41, 42) aufweist, die die Halterung (3) und die Ummantelung (39) verbindet.

3. Vorrichtung nach einem der Ansprüche 1 oder 2, **dadurch gekennzeichnet, daß** sie End-Ringe (33, 37) aufweist, welche auf beiden Seiten der Rollen angeordnet sind und längslaufende Löcher aufweisen, mit welchen die Enden der Rollen jeweils zusammen wirken.

4. Vorrichtung nach einem der vorangehenden Ansprüche, **dadurch gekennzeichnet, daß** der Antriebsstab (8) zwei ringförmige Bereiche mit Zahnradzähnen (19, 20) aufweist, zwischen weichen sich zumindest teilweise dessen genanntes Gewinde erstreckt.

5. Vorrichtung nach einem der vorangehenden Ansprüche, **dadurch gekennzeichnet, daß** sie einen Gleitring (62) aufweist, der durch die Ummantelung getragen wird und um den Bereich des Antriebsstabs herum zwischen dessen genannten vorderen und hinteren Bereich angeordnet ist.

6. Vorrichtung nach einem der vorangehenden Ansprüche, **dadurch gekennzeichnet, daß** die Ummantelung einen Längsführungsstab (67) aufweist, der mit einer Führungsbohrung (65) des Antriebsstabs (64) zusammen wirkt.

7. Vorrichtung nach einem der vorangehenden Ansprüche, **dadurch gekennzeichnet, daß** der Antriebsstab (8) mittels eines Wälzlagers (10) in der Halterung angebracht ist, welches einen axialen Anschlag bildet.

8. Vorrichtung nach einem der vorangehenden Ansprüche, **dadurch gekennzeichnet, daß** die Antriebseinrichtung einen Motor (44) aufweist, des Gehäuse (45) die Motorwelle (51) trägt und an der Halterung (2) angebracht ist.

9. Vorrichtung nach einem der vorangehenden Ansprüche, **dadurch gekennzeichnet, daß** die Motorwelle (50) der Antriebseinrichtung und die Antriebsstange (8) miteinander ausgerichtet sind und zwischen ihnen eine Rotationskupplungseinrichtung (53) vorgesehen ist.

10. Vorrichtung nach einem der Ansprüche 1 bis 8, **dadurch gekennzeichnet, daß** die motorwelle (77) und der Antriebsstab (76) miteinander ausgerichtet und aus einem Stück gebildet sind, um eine Antriebswelle (79) zu bilden.

11. Vorrichtung nach Anspruch 10, **dadurch gekennzeichnet, daß** die Antriebswelle (79) drehbar mittels eines Wälzlagers (83), welches einen axialen Anschlag bildet, in der Halterung (82) und auf der anderen Seite deren genannten Gewindebereichs in einem Gehäuse (87) mittels eines Wälzlagers (86) angebracht ist.

12. Vorrichtung nach einem der vorangehenden Ansprüche, **dadurch gekennzeichnet, daß** der Antriebsstab (8) einstückig ist.

13. Vorrichtung nach einem der Ansprüche 1 bis 11, **dadurch gekennzeichnet, daß** der Antriebsstab (89) ein Längshauptteil aufweist, auf welchem eine Muffe (91 ), welche das genannte Gewinde aufweist, und/oder mindestens ein Ring, welcher den genannten ringförmigen Bereich mit den Zahnradzähnen aufweist, angeordnet ist/sind.

14. Vorrichtung nach einem der vorangehenden Ansprüche, **dadurch gekennzeichnet, daß** das genannte Gewinde und die genannten Zahnradzähne des Antriebsstabs (8) den gleichen Äussendurchmesser aufweisen.

15. Vorrichtung nach einem der vorangehenden Ansprüche, **dadurch gekennzeichnet, daß** der Antriebsstab (8) mindestens eine Rille (21) aufweist, die zwischen dem genannten Gewinde und dem ringförmigen Bereich mit Zahnradzähnen angebracht ist.

16. Vorrichtung nach einem der vorangehenden Ansprüche, **dadurch gekennzeichnet, daß** die Zahnradzähne der Rollen in ihrem genannten Gewindebereich erzeugt sind.

17. Vorrichtung nach einem der vorangehenden Ansprüche, **dadurch gekennzeichnet, daß** sie eine Einrichtung (38) aufweist, welche Anschläge bildet, die mit den End-Ringen zusammenwirken und auf beiden Seiten des Längsstapels angeordnet sind, der durch diese End-Ringe und die Rollen gebildet wird.

## Claims

1. Actuator device comprising:
a support (2):
a longitudinal drive rod (8) of which a rear end section (9) is mounted and rotates inside the said support, and of which a front end section (17) has an external screw thread (18) and, at least on part of its annular section, gear teeth (19);
a longitudinal sheath (39) positioned around and coaxially to the said drive rod and disposing of an internal screw thread;
a series of rollers (28) positioned longitudinally between the said drive rod and the said sheath and disposing of an external screw thread engaged with the external screw thread of the said drive rod on the one hand and with the said internal screw thread of the said sheath on the other hand, and gear teeth (30) engaged with the gear teeth of the said drive rod, the helix angle of the screw thread already mentioned of the said rollers being equal to the screw thread helix angle of the screw thread of the said drive rod, and different from the helix angle of the screw thread of the said sheath;
and a means for the rotational drive (44) of the said drive rod (8), supported on the said support (2) and whose drive shaft (50) is coupled to the rear end of the drive rod (8).

2. Device of claim 1, **characterised by** the fact that it comprises longitudinal guide means (41, 42) connecting the said support (3) to the said sheath (39).

3. Device of any of claims 1 or 2, **characterised by** the fact that it comprises end bushes (33, 37) positioned on either aide of the said rollers and disposing of longitudinal bores in which the ends of these rollers are respectively engaged.

4. Device of any of the previous claims, **characterised by** the fact that the said drive rod (8) comprises two annular sections with gear teeth (19, 20) in between which is situated, at least partially, its previously mentioned screw thread.

5. Device of any of the previous claims, **characterised by** the fact that it comprises a sliding bush (62) housed by the said sheath and positioned around the part of the said drive rod located between its front and rear sections previously mentioned.

6. Device of any of the previous claims, **characterised by** the fact that the said sheath comprises a longitudinal guide rod (67) engaged inside a guide bore (67) of the said drive rod (64).

7. Device of any of the previous claims, **characterised by** the fact that the said drive rod (8) is mounted inside the said support by means of a bearing bush (10) that also forms the axial stop.

8. Device of any of the previous claims, **characterised by** the fact that the said drive means comprises a motor (44) whose casing (45) supports the said drive shaft (51) and which is fixed to the said support (2).

9. Device of any of the previous claims, **characterised by** the fact that the drive shaft (50) of the said drive means and the said drive rod (8) are aligned and have between them a means of rotational coupling (53).

10. Device of any of claims 1 to 8, **characterised by** the fact that the drive shaft (77) of the said drive means and the said drive rod (76) are aligned and are composed of a single part to constitute a drive shaft (79).

11. Device of claim 10, **characterised by** the fact that the said drive shaft (79) is mounted and rotates inside the said support (82) by means of a bearing bush (83) that also acts as the axial stop, and at the opposite end of its previously mentioned threaded section, in a casing (87) of the drive means attached to the said support by means of a bearing bush (86).

12. Device of any of the previous claims, **characterised by** the fact that the said drive rod (8) is one piece.

13. Device of any of claims 1 to 11, **characterised by** the fact that the said drive rod (89) comprises a main longitudinal section onto which a sleeve (91) is fitted presenting its previously mentioned screw thread and/or at least a bush presenting its previously mentioned annular section with gear teeth.

14. Device of any of the previous claims, **characterised by** the fact that the previously mentioned screw thread and the previously mentioned gear teeth of the said drive rod (8) preferably have the same external diameter.

15. Device of any of the previous claims, **characterised by** the fact that the said drive rod (8) has at least one groove (21) between its previously mentioned screw thread and its annular section with gear teeth.

16. Device of any of the previous claims, **characterised by** the fact that the gear teeth of the said rollers are machined in the previously mentioned threaded section.

17. Device of any of the previous claims, **characterised by** the fact that it comprises means (38) that form stops which co-operate with the said end bushes and which are positioned on either side of the longitudinal stack composed by these end bushes and rollers.
